# FASCICULE DE BREVET EUROPEEN

(11) **EP 2 344 381 B1**
(45) Date de publication et mention de la délivrance du brevet: **01.08.2012**
(21) Numéro de dépôt: 09760929.1
(22) Date de dépôt: 09.11.2009
(51) Int. Cl.: B64D 27/14, B64D 29/04, B64D 33/02

(54) **ENTREE D'AIR D'UN MOTEUR D'AVION A HELICES PROPULSIVES NON CARENEES**
LUFTEINLASS FÜR EINEN FLUGZEUGMOTOR MIT MANTELLOSEN PROPELLERN
AIR INTAKE FOR AN AEROPLANE ENGINE WITH UNDUCTED PROPELLERS

(30) Priorité: 14.11.2008 FR 0806381
(43) Date de publication de la demande: 20.07.2011
(73) Titulaire: Snecma, 75015 Paris (FR)
(72) Inventeur: BENSILUM, Stéphane, Emmanuel, Daniel, F-94140 Alfortville (FR)
(74) Mandataire: Ramey, Daniel
(86) Numéro de dépôt international: PCT/FR2009/001295
(87) Numéro de publication internationale: WO 2010/055224

(56) Documents cités:
- FR-A- 2 892 705
- US-A- 3 946 830
- US-A- 4 953 812
- US-A1- 2007 176 052

## Description

La présente invention concerne une entrée d'air d'un moteur d'avion, et en particulier d'un moteur d'avion à hélices propulsives non carénées (en anglais « open-rotor pusher » ou « pusher unducted fan »).

Un moteur de ce type (tel que celui décrit dans la demande FR-A1-2 892 705) comprend deux turbines contrarotatives dont chacune est solidaire en rotation d'une hélice située à l'extérieur de la nacelle du moteur, les deux hélices étant agencées coaxialement l'une derrière l'autre à l'extrémité aval du moteur.

Ce moteur est fixé à un avion par l'intermédiaire d'un pylône qui s'étend sensiblement radialement par rapport à l'axe longitudinal du moteur et dont l'extrémité radialement interne est reliée à l'extrémité amont de la nacelle du moteur, c'est-à-dire à l'entrée d'air de ce moteur.

Le pylône doit être à une distance axiale suffisante des hélices et de l'extrémité amont ou bord d'attaque de l'entrée d'air, en particulier pour des raisons aérodynamiques. Dans la technique actuelle, il est nécessaire de rallonger l'entrée d'air du moteur en direction axiale pour permettre la liaison du pylône à l'entrée d'air et au moteur, ce qui entraîne une augmentation significative de la masse de la nacelle et de la traînée générée par celle-ci en fonctionnement.

L'entrée d'air d'un moteur à hélices propulsives non carénées est généralement axisymétrique dans la technique actuelle, c'est-à-dire que son bord d'attaque est inscrit dans un plan perpendiculaire à l'axe du moteur. Une entrée d'air axisymétrique a un rapport UD constant sur sa circonférence, L étant la longueur locale de l'entrée d'air, mesurée parallèlement à l'axe du moteur entre un point du bord d'attaque et un plan passant au niveau de la roue d'entrée du moteur, et D étant le diamètre interne de l'entrée d'air, au niveau de cette roue d'entrée.

Lorsque l'entrée d'air n'est pas axisymétrique, son bord d'attaque définit une surface approximativement plane appelée section de captation (en anglais « hilite » ou « high light »). On définit pour ce type d'entrée d'air une longueur globale d'entrée d'air qui est égale à la distance entre le plan transversal au niveau de la roue d'entrée du moteur et le point d'intersection entre le plan de captation de l'entrée d'air et l'axe moteur.

On connaît par exemple des entrées d'air de moteur d'avion du type en biseau (en anglais « scarf ») dont le plan de captation a une inclinaison marquée par rapport à l'axe longitudinal du moteur, la partie inférieure de l'entrée d'air faisant saillie axialement vers l'amont par rapport à la partie supérieure de celle-ci. Une entrée d'air de ce type est définie par un rapport L/D « global » (longueur globale sur diamètre) et présente un rapport UD « local » (longueur locale sur diamètre) qui varie de façon linéaire sur la circonférence de l'entrée d'air.

Cette forme particulière de l'entrée d'air en biseau a essentiellement pour fonction de limiter le bruit émis par le moteur vers l'amont, en direction du sol. En effet, la partie inférieure de plus grande longueur de l'entrée d'air en biseau permet de réfléchir et de dévier vers le haut une plus grande partie du bruit émis vers l'amont par le moteur en fonctionnement. Ce type de moteur est en général fixé sous l'aile d'un avion au moyen d'un pylône qui est reliée à l'entrée d'air au niveau de sa partie supérieure de plus petite longueur.

L'invention a notamment pour but de proposer une solution simple, efficace et économique aux problèmes précités liés à l'intégration d'un pylône à l'entrée d'air d'un moteur d'avion à hélices propulsives non carénées.

Elle propose à cet effet une entrée d'air d'un moteur d'avion du type à hélices propulsives non carénées, destinée à être reliée par un pylône au fuselage d'un avion, caractérisée en ce que la longueur locale de l'entrée d'air, mesurée parallèlement à l'axe du moteur entre un point du bord d'attaque de l'entrée d'air et un plan transversal situé au niveau d'une roue d'entrée du compresseur du moteur, est plus grande dans la zone de l'entrée d'air reliée au pylône et plus faible dans la zone de l'entrée d'air opposée au pylône.

La longueur locale de l'entrée d'air selon l'invention varie sur la circonférence de l'entrée d'air, en étant maximale dans la zone reliée au pylône, et minimale dans la zone opposée, au contraire de la technique antérieure dans laquelle la partie supérieure de plus faible longueur de l'entrée d'air en biseau est reliée au pylône d'accrochage. La forme et les dimensions de la zone de l'entrée d'air reliée au pylône sont optimisées en fonction du dimensionnement du pylône, alors que la forme et les dimensions du reste de l'entrée d'air sont optimisées indépendamment de ce pylône, de façon à limiter la masse de l'entrée d'air et la traînée générée par la nacelle du moteur en fonctionnement.

La variation de la longueur locale de l'entrée d'air est non linéaire sur la circonférence de l'entrée d'air. Contrairement à la technique antérieure, la section de captation de l'entrée d'air n'est pas plane et il n'est pas possible de définir la longueur de l'entrée d'air selon l'invention par un rapport UD « global ».

Le rapport L/D « local » de l'entrée d'air selon l'invention varie de préférence entre 2,5 et 0,9 environ entre la zone reliée au pylône et la zone opposée de l'entrée d'air, L étant la longueur locale de l'entrée d'air, et D étant son diamètre interne, L et D étant mesurés comme indiqué ci-dessus.

Avantageusement, dans une direction perpendiculaire à un plan médian passant par l'axe du pylône et par l'axe du moteur, le bord d'attaque de l'entrée d'air a un contour sensiblement en forme de dièdre. L'angle au sommet du dièdre est par exemple compris entre 90 et 175° environ. Le sommet du dièdre peut avoir une forme arrondie concave du côté de l'ouverture du dièdre. Les côtés du dièdre peuvent être sensiblement rectilignes ou incurvés concaves ou convexes.

De préférence, l'entrée d'air est symétrique par rapport à un plan médian passant par l'axe du pylône et par l'axe du moteur. Le bord d'attaque de l'entrée d'air selon l'invention définit alors deux dièdres situés de part et d'autre de ce plan médian et reliés par des arrondis.

Les côtés amont de ces deux dièdres s'étendent dans un premier plan d'entrée d'air qui est incliné par rapport à l'axe du moteur, et les côtés aval des dièdres s'étendent dans un second plan d'entrée d'air plus incliné sur l'axe du moteur. Ces deux plans sont sécants, la ligne de coupe de ces deux plans passant sensiblement au niveau des sommets des dièdres. L'entrée d'air selon l'invention est donc définie par deux plans d'entrée d'air contre un seul dans la technique antérieure.

Selon un autre aspect de l'invention, l'entrée d'air comprend une saillie axiale, le pylône étant destiné à s'étendre sensiblement axialement et radialement par rapport à l'axe du moteur, depuis cette saillie de l'entrée d'air. La forme et les dimensions de cette saillie sont déterminées en fonction de celles du pylône. Cette saillie peut également servir à l'installation d'autres équipements encombrants du moteur.

Le bord d'attaque et/ou le bord de fuite du pylône peuvent être inclinés d'un angle compris entre 10 et 35° environ, par rapport à un plan transversal.

L'invention concerne également un moteur d'avion à hélices propulsives non carénées, comprenant une entrée d'air telle que décrite ci-dessus.

L'invention concerne enfin un avion, caractérisé en ce qu'il comprend deux moteurs ou plus du type précité, ces moteurs étant fixés par des pylônes sur l'arrière du fuselage de l'avion, de part et d'autre de celui-ci. Lorsque l'avion comporte deux moteurs, le pylône de fixation de chaque moteur est de préférence incliné d'un angle compris entre 5 et 45°, et par exemple de 20° environ, par rapport à un plan horizontal passant sensiblement au niveau de l'extrémité du pylône reliée au fuselage. Lorsque l'avion comporte un moteur supplémentaire, le pylône de fixation de ce moteur peut être dans un plan sensiblement vertical. Ce troisième moteur peut être situé au-dessus du fuselage de l'avion.

L'invention sera mieux comprise et d'autres détails, caractéristiques et avantages de la présente invention apparaîtront plus clairement à la lecture de la description qui suit faite à titre d'exemple non limitatif et en référence aux dessins annexés dans lesquels :
- la figure 1 est une vue schématique en coupe axiale d'un moteur à hélices propulsives non carénées,
- la figure 2 est une vue schématique en perspective d'un avion équipé de deux moteurs à hélices propulsives non carénées selon l'invention,
- la figure 3 est une vue à plus grande échelle d'un des moteurs de la figure 2,
- la figure 4 est une vue schématique en perspective de la nacelle et du pylône du moteur de la figure 3, et
- la figure 5 est une vue schématique partielle de côté de la nacelle et du pylône de la figure 4, à plus grande échelle.

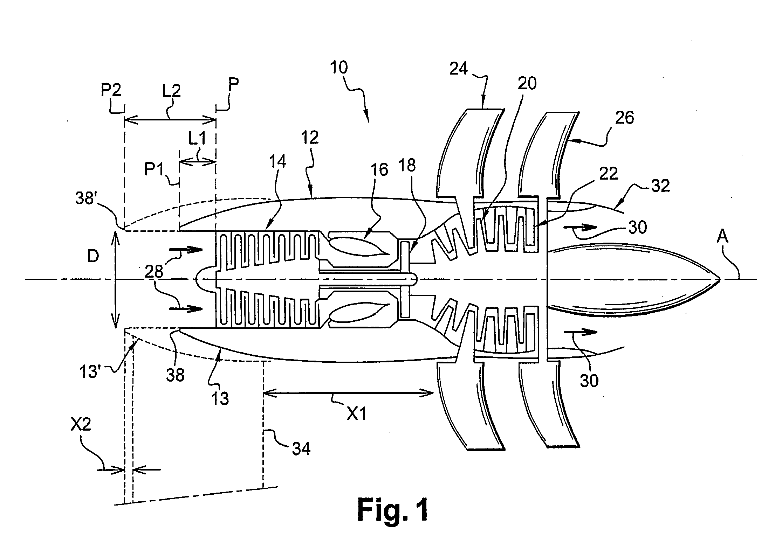

On se réfère d'abord à la figure 1 qui représente un moteur d'avion 10 à hélices propulsives non carénées, ce moteur 10 comportant une turbomachine entourée par une nacelle 12 sensiblement axisymétrique dont l'extrémité amont forme une entrée d'air 13.

La turbomachine comprend d'amont en aval, dans le sens d'écoulement des gaz à l'intérieur de celle-ci, un compresseur 14, une chambre de combustion 16, une turbine amont 18 haute-pression, et deux turbines aval 20, 22 basse-pression contrarotatives, c'est-à-dire tournant dans des sens opposés autour de l'axe longitudinal A du moteur.

Chaque turbine aval 20, 22 est solidaire en rotation d'une hélice externe 24, 26 qui s'étend sensiblement radialement à l'extérieur de la nacelle 12.

Le flux d'air 28 qui pénètre dans l'entrée d'air 13 passe dans le compresseur 14 pour y être comprimé, puis est mélangé à du carburant et brûlé dans la chambre de combustion 16, les gaz de combustion étant alors injectés dans les turbines pour entraîner en rotation les hélices 26, 28 qui fournissent la majeure partie de la poussée du moteur. Les gaz de combustion 30 qui sortent des turbines 20, 22 sont ensuite éjectés à travers une tuyère aval 32 pour augmenter la poussée du moteur.

Les hélices 24, 26 sont situées au voisinage de l'extrémité aval du moteur et sont dites propulsives ou de propulsion, par opposition à des hélices externes qui seraient situées à l'amont du moteur qui seraient dites de traction.

Ce type de moteur est relié à une partie d'un avion, telle que son fuselage, par l'intermédiaire d'un pylône 34 qui s'étend sensiblement radialement par rapport à l'axe A, à l'extérieur de la nacelle 12, et qui doit être à une distance axiale X1 suffisante des bords d'attaque des aubes de l'hélice amont 24 et une distance axiale X2 suffisante du bord d'attaque 38 de l'entrée d'air, notamment pour des raisons aérodynamiques. Il est alors nécessaire dans la technique actuelle de rallonger axialement l'entrée d'air 13 pour permettre l'intégration du pylône 34 au moteur.

Dans l'exemple de la figure 1, l'entrée d'air 13 représentée en traits continus a une longueur minimale optimale pour assurer notamment la canalisation de l'air jusqu'au compresseur 16, tandis que l'entrée d'air 13' représentée en traits discontinus a été allongée pour autoriser l'intégration du pylône 34 au moteur 10. L'allongement de l'entrée d'air augmente toutefois de manière importante la masse du moteur et la traînée générée par celle-ci en vol.

L'entrée d'air 13 du moteur est profilée et son extrémité amont ou bord 38 d'attaque des gaz a en section une forme arrondie convexe.

Une entrée d'air d'un moteur d'avion peut notamment être définie par un rapport L/D « local » qui dans l'exemple représenté est constant sur toute la circonférence de l'entrée d'air. D est le diamètre interne de l'entrée d'air 13, mesuré au niveau de la première roue ou roue d'entrée du compresseur 14, et L est la longueur locale de cette entrée d'air mesurée parallèlement à l'axe A entre un point du bord d'attaque 38 et un plan transversal P situé au niveau de la roue d'entrée du compresseur 14. L'entrée d'air 13 est ici axisymétrique et tous les points du bord d'attaque 38 sont situés dans un même plan transversal P1 (ou P2 dans le cas de l'entrée d'air 13'), appelé plan ou section de captation.

L'entrée d'air 13 en traits continus a une longueur L1 (mesurée entre P et P1) et est définie par le rapport L1/D, et l'entrée d'air 13' en traits discontinus a une longueur L2 (mesurée entre P et P2) et est définie par le rapport L2/D.

L'invention permet de remédier aux problèmes précités liés au rallongement de l'entrée d'air du moteur grâce à une entrée d'air dont le rapport L/D n'est pas constant mais varie de façon non linéaire sur la circonférence de l'entrée d'air, la zone de l'entrée d'air de plus grande longueur étant reliée au pylône.

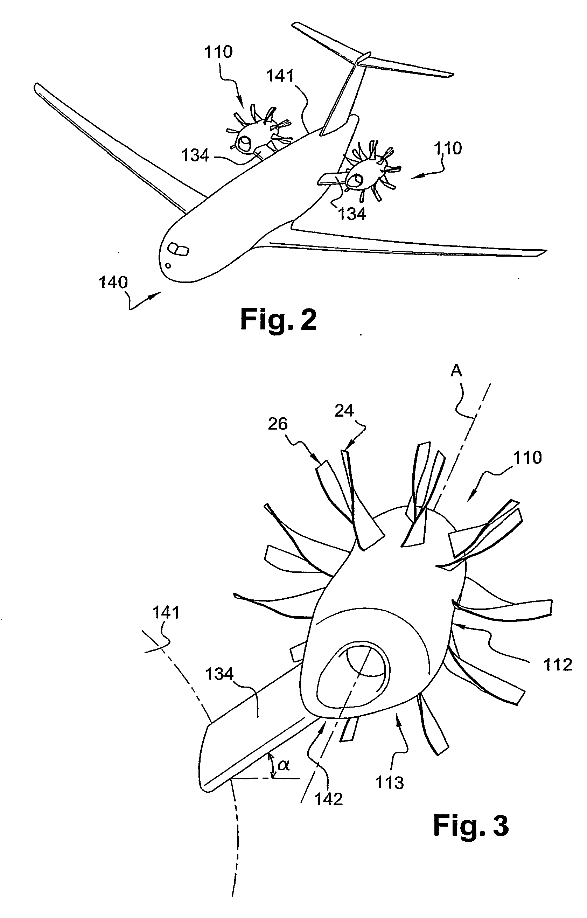

Les figures 2 à 5 représentent un mode préféré de réalisation de l'invention, dans lequel les éléments déjà décrits en référence à la figure 1 sont référencés par les mêmes chiffres, augmentés d'une centaine.

L'avion 140 représenté en figure 1 est équipé de deux moteurs 110 à hélices propulsives non carénées, ces moteurs étant fixés par des pylônes 134 à l'arrière du fuselage 141 de l'avion, de part et d'autre de celui-ci.

La nacelle 112 de chaque moteur 110 comprend à son extrémité amont une entrée d'air 113 selon l'invention qui comprend une saillie axiale 142 de liaison au pylône 134. Ce pylône 134 s'étend sensiblement radialement par rapport à l'axe A du moteur, depuis la saillie 142 de l'entrée d'air vers l'extérieur jusqu'au fuselage 141 de l'avion. La saillie 142 de l'entrée d'air est donc située du côté du fuselage 141 de l'avion. Le pylône 134 est incliné d'un angle α compris entre 5 et 45°, et par exemple de 20° environ, par rapport à un plan horizontal passant sensiblement au niveau de l'extrémité du pylône 134 reliée au fuselage 141.

La saillie 142 a une forme générale triangulaire ou trapézoïdale dont le sommet ou la petite base est situé à l'amont et dont la (grande) base est située à l'aval. La base aval de la saillie 142 s'étend angulairement autour de l'axe A sur un angle inférieur ou égal à 180° environ.

Cette saillie 142 forme la zone de l'entrée d'air de plus grande longueur axiale et sa longueur, mesurée entre le plan P précité et un plan transversal P2' passant au niveau de l'extrémité amont de la saillie, est notée Lmax. Cette longueur Lmax est sensiblement égale à la longueur L2 de l'entrée d'air 13' de la figure 1, cette entrée d'air 13' ayant été rallongée pour autoriser l'intégration du pylône 34 au moteur.

La longueur Lmax permet de calculer la valeur maximale du rapport L/D de l'entrée d'air qui est égale à Lmax/D et qui vaut par exemple 2,5 environ.

La saillie 142 est reliée à une portion sensiblement annulaire 144 de l'entrée d'air qui s'étend autour de l'axe A, et qui définit la zone de plus faible longueur de l'entrée d'air. Cette portion 144 est diamétralement opposée à la saillie 142. La longueur de cette portion 144, mesurée entre le plan P et un plan transversal P1' passant au niveau de l'extrémité aval de cette portion, est notée Lmin (l'extrémité aval de la portion 144 étant diamétralement opposée à l'extrémité amont de la saillie 142). Cette longueur Lmin est sensiblement égale à la longueur L1 de l'entrée d'air 13 de la figure 1, c'est-à-dire à la valeur minimale optimale de cette entrée d'air, déterminée indépendamment du pylône.

La longueur Lmin permet de calculer la valeur minimale du rapport L/D de l'entrée d'air qui est égale à Lmin/D et qui vaut par exemple 0,9 environ.

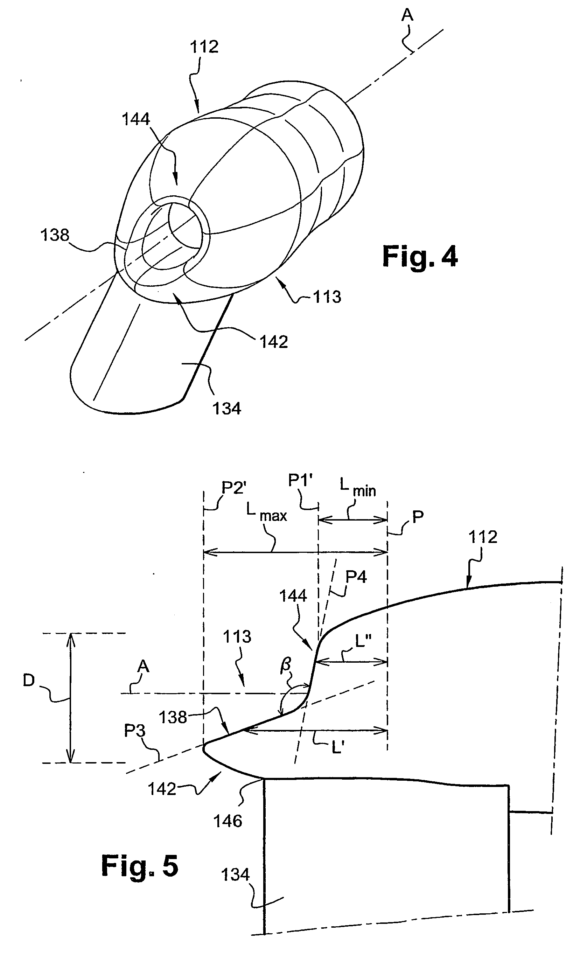

Lorsque l'entrée d'air 113 est vue de côté ou dans une direction perpendiculaire au plan médian passant par l'axe A du moteur et l'axe du pylône 134, comme c'est le cas en figure 5, le bord d'attaque 138 définit de part et d'autre de l'axe A un dièdre ayant un angle d'ouverture β relativement grand, c'est-à-dire supérieur à 90°. Cet angle β est de l'ordre de 120-150° dans l'exemple représenté.

Le bord d'attaque 138 de l'entrée d'air définit ainsi de part et d'autre du plan médian une pluralité de longueurs L', L" différentes de l'entrée d'air, comprises entre Lmin et Lmax. Ces longueurs permettent de faire varier le rapport L/D de l'entrée d'air sur toute sa circonférence. Au contraire de la technique antérieure, l'évolution de ce rapport n'est pas linéaire (cas où le bord d'attaque s'étend dans un seul et même plan incliné d'entrée d'air) mais est au contraire non linéaire et par exemple approximativement hyperbolique ou parabolique. Cette configuration particulière du bord d'attaque 138 permet de définir au moins deux plans d'entrée d'air.

Dans l'exemple de la figure 5, le bord d'attaque 138 de l'entrée d'air définit deux plans P3, P4 sécants inclinés par rapport à l'axe A. Le premier plan amont P3 est défini par la partie du bord d'attaque de la saillie 142 (ou les côtés amont des dièdres précités) et est incliné d'un angle compris entre 15 et 50° environ par rapport à l'axe A. Le second plan aval P4 est défini par la partie du bord d'attaque de la portion 144 de l'entrée d'air (ou des côtés aval des dièdres) et est incliné d'un angle de 70-90° environ par rapport à l'axe A. Ces deux plans P3, P4 se coupent sensiblement au niveau des zones de jonction entre la saillie 142 et la portion annulaire 144 de l'entrée d'air.

Comme cela est également visible en figure 5, la zone 146 de jonction entre l'entrée d'air 113 et le bord d'attaque du pylône 134 est située dans un plan transversal qui s'étend entre les plans transversaux P1' et P2'.

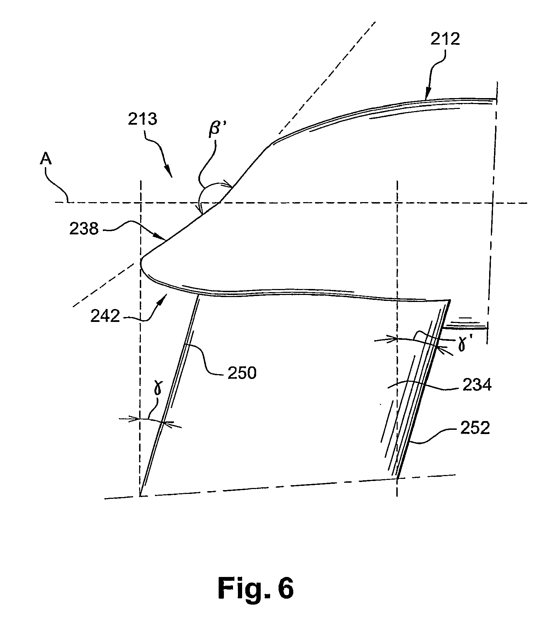

Dans la variante représentée en figure 6, le bord d'attaque 238 de l'entrée d'air 213 définit de part et d'autre de l'axe A un dièdre ayant un angle d'ouverture β' par exemple compris entre 90 et 175° environ. Cet angle β' est de 170° environ dans l'exemple représenté.

Le bord d'attaque 250 du pylône 234 est ici incliné par rapport à un plan perpendiculaire à l'axe A du moteur, d'un angle γ compris entre 10 et 35° environ, et de préférence de 20°. Le bord de fuite 252 du pylône 234 est également incliné par rapport à un plan perpendiculaire à l'axe A, d'un angle γ' compris entre 10 et 35° environ, et de préférence de 20°. Les valeurs des angles γ et γ' peuvent être identiques ou différentes.

Le pylône de fixation du moteur à l'avion peut en outre être incliné par rapport à un plan radial passant par l'axe du moteur.

Dans une variante de réalisation de l'invention, la saillie axiale de l'entrée d'air permet l'intégration d'un équipement encombrant du moteur autre qu'un pylône.

## Revendications

1. Entrée d'air (113) d'un moteur d'avion du type à hélices propulsives non carénées, destinée à être reliée par un pylône (134) au fuselage (141) d'un avion, **caractérisée en ce que** la longueur locale de l'entrée d'air, mesurée parallèlement à l'axe (A) du moteur entre un point du bord d'attaque (138) de l'entrée d'air et un plan transversal (P) situé au niveau d'une roue d'entrée du compresseur du moteur, est plus grande dans la zone (142) de l'entrée d'air reliée au pylône et plus faible dans la zone de l'entrée d'air opposée au pylône.

2. Entrée d'air selon la revendication 1, **caractérisée en ce que** le rapport L/D varie entre 2,5 et 0,9 environ entre la zone (142) de l'entrée d'air reliée au pylône (134) et la zone opposée de l'entré d'air, L étant la longueur locale de l'entrée d'air, et D étant son diamètre interne mesuré au niveau de la roue d'entrée du compresseur du moteur.

3. Entrée d'air selon la revendication 1 ou 2, **caractérisée en ce que**, dans une direction perpendiculaire à un plan médian passant par l'axe du pylône (134) et par l'axe (A) du moteur, le bord d'attaque (138) de l'entrée d'air a un contour sensiblement en forme de dièdre.

4. Entrée d'air selon la revendication 3, **caractérisée en ce que** l'angle (β,β') au sommet du dièdre est compris entre 90 et 175°.

5. Entrée d'air selon la revendication 3 ou 4, **caractérisée en ce que** le sommet du dièdre a une forme arrondie concave du côté de l'ouverture du dièdre.

6. Entrée d'air selon l'une des revendications précédentes, **caractérisée en ce qu'**elle comprend une saillie axiale (142) vers l'amont, le pylône (134) étant destinée à s'étendre sensiblement radialement par rapport à l'axe (A) du moteur depuis cette saillie.

7. Entrée d'air selon l'une des revendications précédentes, **caractérisée en ce qu'**elle est symétrique par rapport à un plan médian passant par l'axe du pylône (134) et par l'axe (A) du moteur.

8. Entrée d'air selon l'une des revendications précédentes, **caractérisée en ce que** le bord d'attaque (250) et/ou le bord de fuite (252) du pylône (234) sont inclinés d'un angle (γ) compris entre 10 et 35° environ, par rapport à un plan transversal.

9. Moteur d'avion (110) à hélices propulsives non carénées, **caractérisé en ce qu'**il comprend une entrée d'air (113) selon l'une des revendications précédentes.

10. Avion (140), **caractérisé en ce qu'**il comprend au moins deux moteurs selon la revendication 9, ces deux moteurs (110) étant fixés par des pylônes (134) sur l'arrière du fuselage (141) de l'avion, de part et d'autre de celui-ci.

11. Avion selon la revendication 10, **caractérisé en ce qu'**il comprend un troisième moteur fixé par un pylône sur l'arrière du fuselage de l'avion, ce pylône s'étendant sensiblement verticalement au-dessus du fuselage.

## Claims

1. An air inlet (113) of an aeroengine of the type having unducted pusher propellers, the engine being for connection via a pylon (134) to the fuselage (141) of an airplane, the air inlet being **characterized in that** the local length of the air inlet, measured parallel to the axis (A) of the engine between a point of the leading edge (138) of the air inlet and a transverse plane (P) situated level with an upstream rotor of the compressor of the engine, is longer in the zone (142) of the air inlet that is connected to the pylon, and shorter in the zone of the air inlet opposite from the pylon.

2. An air inlet according to claim 1, **characterized in that** the ratio L/D lies in the range approximately 2.5 to 0.9 between the zone (142) of the air inlet that is connected to the pylon (134) and the opposite zone of the air inlet, L being the local length of the air inlet, and D being its inside diameter measured level with the upstream rotor of the engine compressor.

3. An air inlet according to claim 1 or claim 2, **characterized in that** in a direction perpendicular to a midplane containing the axis of the pylon (134) and the axis (A) of the engine, the leading edge (138) of the air inlet has an outline that is substantially in the form of a dihedral.

4. An air inlet according to claim 3, **characterized in that** the angle (β, β') at the apex of the dihedral lies in the range 90° to 175°.

5. An air inlet according to claim 3 or claim 4, **characterized in that** the apex of the dihedral has a concave rounded shape beside the open side of the dihedral.

6. An air inlet according to any preceding claim, **characterized in that** it includes an axial projection (142) projecting upstream, the pylon (134) being designed to extend substantially radially relative to the axis (A) of the engine from said projection.

7. An air inlet according to any preceding claim, **characterized in that** it is symmetrical about a midplane containing the axis of the pylon (134) and the axis (A) of the engine.

8. An air inlet according to any preceding claim, **characterized in that** the leading edge (250) and/or the trailing edge (252) of the pylon (234) are inclined at an angle (γ) lying in the range approximately 10° to 35°, relative to a transverse plane.

9. An aeroengine (110) having unducted pusher propellers, the aeroengine being **characterized in that** it includes an air inlet (113) according to any preceding claim.

10. An airplane (140), **characterized in that** it includes at least two engines according to claim 9, those two engines (110) being connected by pylons (134) to the rear of the fuselage (141) of the airplane, on either side thereof.

11. An airplane according to claim 10, **characterized in that** it includes a third engine connected via a pylon to the rear of the airplane fuselage, the pylon extending substantially vertically above the fuselage.

## Patentansprüche

1. Lufteinlass (113) für ein Triebwerk eines Flugzeugs vom Typ mit nicht ummantelten Druckpropellern, der dazu bestimmt ist, über einen Pylon (134) mit dem Flugzeugrumpf (141) eines Flugzeugs verbunden zu werden, **dadurch gekennzeichnet, dass** die lokale Länge des Lufteinlasses parallel zur Triebwerksachse (A) gemessen zwischen einem Punkt der Vorderkante (138) des Lufteinlasses und einer quer verlaufenden Ebene (P), die im Bereich eines Einlassrads des Kompressors des Triebwerks verläuft, in dem mit dem Pylon verbundenen Bereich (142) des Lufteinlasses größer ist und in dem dem Pylon entgegengesetzten Bereich des Lufteinlasses kleiner ist.

2. Lufteinlass nach Anspruch 1, **dadurch gekennzeichnet, dass** das Verhältnis L/D zwischen dem mit dem Pylon (134) verbundenen Bereich (142) des Lufteinlasses und dem entgegengesetzten Bereich des Lufteinlasses zwischen etwa 2,5 und 0,9 liegt, wobei L die lokale Länge des Lufteinlasses und D dessen Innendurchmesser im Bereich des Einlassrades des Kompressors des Triebwerks gemessen ist.

3. Lufteinlass nach Anspruch 1 oder 2, **dadurch gekennzeichnet, dass** in einer Richtung senkrecht zur durch die Achse des Pylons (134) und die Achse (A) des Triebwerks verlaufenden Mittelebene die Vorderkante (138) des Lufteinlasses einen im wesentlichen V-förmigen Umriss hat.

4. Lufteinlass nach Anspruch 3, **dadurch gekennzeichnet, dass** der Winkel (β, β') an der Spitze der V-Form zwischen 90 und 175° beträgt.

5. Lufteinlass nach Anspruch 3 oder 4, **dadurch gekennzeichnet, dass** die Spitze der V-Form einen konkav abgerundeten Verlauf auf der Öffnungsseite der V-Form hat.

6. Lufteinlass nach einem der vorangehenden Ansprüche, **dadurch gekennzeichnet, dass** er einen axialen Vorsprung (142) nach stromaufwärts aufweist, wobei der Pylon (134) dazu bestimmt ist, sich von diesem Vorsprung ausgehend im wesentlichen radial bezüglich der Achse (A) des Triebwerks zu erstrecken.

7. Lufteinlass nach einem der vorangehenden Ansprüche, **dadurch gekennzeichnet, dass** er symmetrisch zu einer Mittelebene verläuft, die durch die Achse des Pylons (134) und die Achse (A) des Triebwerks verläuft.

8. Lufteinlass nach einem der vorangehenden Ansprüche, **dadurch gekennzeichnet, dass** die Vorderkante (250) und/oder die Hinterkante (252) des Pylons (234) bezüglich einer Querebene mit einem Winkel (γ) geneigt verlaufen, der zwischen etwa 10 und 35° beträgt.

9. Flugzeugtriebwerk (110) mit nicht ummantelten Druckpropellern, **dadurch gekennzeichnet, dass** es einen Lufteinlass (113) nach einem der vorangehenden Ansprüche aufweist.

10. Flugzeug (140), **dadurch gekennzeichnet, dass** es zumindest zwei Triebwerke nach Anspruch 9 aufweist, wobei diese beiden Triebwerke (110) über Pylone (134) am Heck des Flugzeugrumpfs (141) beiderseits des letztgenannten befestigt sind.

11. Flugzeug nach Anspruch 10, **dadurch gekennzeichnet, dass** es ein drittes Triebwerk aufweist, das über einen Pylon am Heck des Flugzeugrumpfs befestigt ist, wobei dieser Pylon sich im wesentlichen vertikal über dem Flugzeugrumpf erstreckt.
